# EUROPÄISCHE PATENTSCHRIFT

(11) **EP 1 399 771 B1**
(45) Veröffentlichungstag und Bekanntmachung des Hinweises auf die Patenterteilung: **26.07.2006**
(21) Anmeldenummer: 02747433.7
(22) Anmeldetag: 26.06.2002
(51) Int. Cl.: G02B 21/06

(54) **EINRICHTUNG ZUR FLÄCHIGEN BELEUCHTUNG EINES OBJEKTFELDES**
DEVICE FOR FLAT ILLUMINATION OF AN OBJECT FIELD
DISPOSITIF D'ECLAIRAGE SURFACIQUE DU CHAMP D'UN OBJET

(30) Priorität: 26.06.2001 DE 10130821
(43) Veröffentlichungstag der Anmeldung: 24.03.2004
(73) Patentinhaber: Carl Zeiss SMS GmbH, 07745 Jena (DE)
(72) Erfinder: ENGEL, Thomas, 99102 Erfurt OT Niedernissa (DE); HARNISCH, Wolfgang, 07778 Lehesten (DE); HEISE, Jürgen, 07745 Jena (DE)
(86) Internationale Anmeldenummer: PCT/EP2002/007039
(87) Internationale Veröffentlichungsnummer: WO 2003/003098

(56) Entgegenhaltungen:
- EP-A- 0 435 825
- GB-A- 2 049 985
- US-A- 4 818 049
- US-A- 5 395 362
- US-A- 6 061 133
- PARTLO W N ET AL: "Diffuser speckle model: application to multiple moving diffusers" APPLIED OPTICS, 1 JUNE 1993, USA, Bd. 32, Nr. 16, Seiten 3009-3014, XP002232435 ISSN: 0003-6935
- PATENT ABSTRACTS OF JAPAN vol. 008, no. 082 (P-268), 14. April 1984 (1984-04-14) & JP 58 225347 A (RICOH KK), 27. Dezember 1983 (1983-12-27)

## Beschreibung

Die Erfindung bezieht sich auf ein optisches Gerät mit einer Einrichtung zur flächigen Ausleuchtung eines Objektfeldes. Optische Geräte dieser Art sind beispielsweise Mikroskope, darunter Mikrolithographie-Simulationsmikros-kope, bei denen eine flächige, d. h. über einen singulären Objektpunkt hinausgehend ausgedehnte Beleuchtung des zu untersuchenden Objektes benötigt wird.

Die Homogenität der Ausleuchtung des Objektfeldes ist bei derartigen Geräten von besonderer Bedeutung im Hinblick auf die Qualität der von dem Objektfeld aufgenommenen Bilder. Insofern besteht bei der Verwendung von Laserlichtquellen zur Erzeugung des Beleuchtungslichtes das Problem, daß die Intensität des Lichtes innerhalb des Strahlungsquerschnittes ungleichmäßig verteilt ist, was sich nachteilig auf die Bildqualität auswirkt.

Weitere Schwankungen in der Helligkeit der Ausleuchtung, die sich nachteilig auf die Bildqualität und damit auch auf die Auswerteergebnisse auswirken, sind bei kohärenten Lichtquellen auf niederfrequente Amplitudenmodulationen bzw. kohärentes Rauschen (Speckle) zurückzuführen. Es besteht daher ein bedeutendes Interesse daran, diese Störeinflüsse so weit möglich zu verringern.

Dazu wurde in einer bereits bekannten Lösung in den Strahlengang zwischen der Laserlichtquelle und dem Objektfeld eine rotierende Streuscheibe angeordnet, um die Intensitätsmodulation des Laserlichtes zu verringern.

Weiterhin ist es bekannt, im Zusammenhang mit optischen Geräten Lichtleitkabel einzusetzen. Diese werden bisher dazu verwendet, Licht möglichst flexibel von der Quelle zum Objekt zu übertragen. Üblicherweise werden die Lichtleitkabel zur Übertragung von Beleuchtungslicht im Spektralbereich von langwellig (λ > 400 nm) bis zu infrarot eingesetzt.

In US-A-5395362 sind eine Vorrichtung und ein Verfahren zur Verteilung und Anlieferung von Laserstrahlung mit im wesentlichen gleichmäßiger Intensität an mehrere verschiedene Orte im Raum beschrieben. Die Laserstrahlung wird in einen faseroptischen Wellenleiter gerichtet, der die räumliche Verteilung des Laserstrahls mittels Modenmischung homogenisiert. Die Laserstrahlung wird dann von dem modenmischenden Wellenleiter in mehrere Vertellungsfasern gekoppelt, die an gewünschten räumlichen Orten enden, beispielsweise an dem distalen Ende eines chirurgischen Werkzeugs. Jeder der mehreren Verteilungsleiter gibt Laserstrahlung mit im wesentlichen gleichförmiger Intensität ab.

In US-A-6061133 ist ein Interferometersystem mit geringem kohärentem Rauschen beschrieben. Das System beinhaltet eine verbesserte. Quelle geringer räumlicher Kohärenz, die von einer Laserlichtquelle erhalten wird, die einen Lichtstrahl durch eine strahlformende Linse auf einen ersten Satz von zwei kaskadenartig angeordneten Diffusoren liefert. Einer der Diffusoren ändert sich dynamisch und wird durch eine rotierende Mattglasscheibe gebildet. Die Diffusoren liefern dann Licht an ein Interferometer mit einer Zweistrahl-Interferometer-Konfiguration, wie z. B. ein Fizeau-, ein Twyman-Green oder ein Mach-Zehader-Interferometer. In einer Ausführungsform ist der erste Diffusor der rotierende Mattgriasdiffusor und der zweite Diffusor eine optische Multimodanfaser. Die Austrittsfläche der Faser stellt eine räumlich inkohärente, ausgedehnte Lichtquelle für das Interferometer dar. Der Laser, ein Motor zum Antrieb des ersten Diffusors und die Diffusoren selbst sind auf einem Basiselement angebracht, das von dem Grundkörper, auf dem das Interferometer angebracht ist, getrennt ist.

In EP-A-0715147 ist ein AFM- bzw. Rasterkraftmikroskopie-Iustrument für große Proben beschrieben, das ein lichtstreuendes optisches System aufweist. Das Instrument ist mit einem optischen Mikroskop ausgestattet. Beleuchtungslicht wird in das optische Mikroskop eingestrahlt, um eine Dunkelfeldbeleuchtung bereitzustellen. Der Einfallswinkel zu der Oberfläche einer Probe ist dabei variabel. Das einfallende Licht wird in das Gehäuse des AFM durch zwei optische Fasern eingebracht. Von der Oberfläche der Probe reflektiertes Licht wird von einem in zwei Teile aufgespalteten Detektor empfangen. In Abhängigkeit von Signalen von dem Detektor wird das Dunkelfeld-Mikroskop automatisch fokussiert. Die gesamte Vorrichtung ist in einer schallisolierenden dunklen Box eingeschlossen, um das Signal/Rausch-Verhältnis während der Detektion des gestreuten Lichts zu verbessern.

In DE-A-19946594 ist ein Mikroskop, vorzugsweise zur Inspektion bei der Halbleiterfertigung, beschrieben, das einen gepulsten Laser zur Beleuchtung, vorzugsweise im UV-Bereich, umfaßt. Zur Homogenisierung der Beleuchtung ist dem Laser mindestens eine rotierende Streuscheibe nachgeordnet. Vorzugsweise werden zwei direkt oder indirekt hintereinander im Beleuchtungsstrahlengang angeordnete entgegengesetzt rotierenden Streuscheiben verwendet.

Davon ausgehend liegt der Erfindung die Aufgabe zugrunde, eine weitere Möglichkeit zur Homogenisierung der Ausleuchtung eines ausgedehnten Objektfeldes zu schaffen.

Erfindungsgemäß wird ein optisches Gerät nach Anspruch 1, insbesondere ein Mikrolithographie-Simulationsmikroskop vorgeschlagen, das eine auf ein Objektfeld ausrichtbare Betrachtungseinrichtung und eine Beleuchtungseinrichtung umfaßt. Die Einrichtung zur flächigen Ausleuchtung eines Objektfeldes bei dem optischen Gerät umfaßt hierzu eine Laserlichtquelle zur Erzeugung von Beleuchtungslicht und ein Lichtleitkabel mit wenigstens einer optischen Faser, durch die daß Beleuchtungslicht zum Objekt geleitet wird, wobei die optische Faser so ausgebildet und bemessen ist, daß sich die Intensitätsverteilung des Beleuchtungslichtes innerhalb ihres Querschnitts auf dem Weg vom Einstrahlseitigen zum abstrahlseitigen Ende zunehmend vergleichmäßigt und das Beleuchtungslicht vom Abstrahlseitigen Ende der optischen Faser mit im wesentlichen homogener Intensitätsverteilung auf das Objekt gerichtet ist.

Hiermit wird ein Effekt erzielt, der dem einer rotierenden Streuscheibe ähnlich ist. Im Unterschied zu der rotierenden Streuscheibe handelt es sich jedoch bei der erfindungsgemäßen Lösung um ein statisches System, daß aufgrund des Fehlens bewegter Komponenten eine besonders hohe Störsicherheit aufweist. Zudem entfällt die bei einer rotierenden Streuscheibe benötigte Antriebseinrichtung wie auch die zugehörige Ansteuerung.

Das Lichtleitkabel kann überdies flexibel verlegt werden, ohne daß für dessen Lage besondere Einschränkungen bestehen, so daß im Unterschied zu einer Streuscheibe mit Antriebseinrichtung auch eine größere Kompaktheit beim Geräteaufbau erzielt werden kann.

Eine Verminderung der Intensitätsmodulation über den Strahlquerschnitt läßt sich über unterschiedliche Konfigurationsparameter des Lichtleitkabels verwirklichen. Beispielsweise kann dies über die Vorgabe der Länge der optischen Faser und/oder des Durchmessers der optischen Faser und/oder des verwendeten Materials für die optische Faser erfolgen, so daß die räumliche Kohärenz des Laserlichts zerstört wird. Unter einer Verminderung der Intensitätsmodulation wird hier eine Verringerung der Intensitätsschwankung über den Querschnitt am Ausgang des Lichtleitkabels auf weniger als 10 %, vorzugsweise auf weniger als 1 %, verstanden.

Die Länge der optischen Faser beträgt mindestens 30 cm. Bei zu großen Längen sind die Intensitätsverluste zu hoch, so daß die Maximallänge derzeit technologisch bedingt auf vorzugsweise etwa 100 cm beschränkt werden sollte. Sofern beständigere bzw. verlustfreiere optische Fasern verfügbar sind, kann deren Länge auch größer gewählt werden.

Die verwendete optische Faser ist ein Multimode-Lichtleiter. Der Durchmesser des lichtleitenden Teils besitzt ein Vielfaches der Wellenlänge des von der Quelle kommenden Lichtes.

Die Laserlichtquelle erzeugt Licht im UV-Bereich, vorzugsweise bei einer. Wellenlänge von 386 nm, 365 nm, 266 nm, 257 nm, 248 nm, 213 nm, 211 nm oder 193 nm bei einer Bandbreite von jeweils etwa ± 2 nm.

In einer weiteren vorteilhaften Ausgestaltung der Erfindung ist die Lichtquelle eine gepulste Laserlichtquelle. Im Vergleich zu Streuscheiben ist bei dem erfindungsgemäßen Einsatz von optischen Fasern zu beobachten, daß die Homogenisierung bereits bei kleinen Pulszahlen mit gutem Erfolg erreicht wird, wodurch sich eine solche Beleuchtungsvorrichtung für eine Optimierung des Meßdurchsatzes bei Meßverfahren sehr gut eignet.

Zur weiteren Verbesserung bzw. Homogenisierung der Ausleuchtung können zusätzlich eine oder auch mehrere rotierende Streuscheiben dem Lichtleitkabel vor- und/oder nachgeordnet werden.

Werden zwei Streuscheiben vorgesehen, so ist es im Hinblick auf die Homogenisierung vorteilhaft, wenn diese in entgegengesetzte Richtungen drehen. Zur Erzielung der Streuwirkung sind die Streuscheiben beispielsweise granuliert. Bei Verwendung einer gepulsten Laserlichtquelle wird die Granulierung, d. h. die Größe der einzelnen Granulatkörner, auf die Pulszahl und Pulsdauer sowie auf die Drehgeschwindigkeit der Streuscheibe abgestimmt. Auch die Abstimmung auf die charakteristische Kohärenzlänge ist denkbar. Die Abstimmung hat zum Ziel, daß das Licht während eines Pulses, z. B. während 10 ns, im wesentlichen durch dieselbe Stelle an der Streuscheibe hindurchtreten kann, d. h. die Streuscheibe hinsichtlich ihrer optischen Auswirkung quasi stillsteht, während andererseits im Zeitabschnitt zwischen jeweils zwei Pulsen eine merkliche Weiterdrehung erfolgt. Dadurch wird sowohl die Granulierung der Streuscheibe als auch die Intensitätsinhomogenität über den Strahlquerschnitt der Lichtquelle ausgemittelt. Anstelle einer Granulierung kann auch ein holographisches Profil verwendet werden.

Vorzugsweise ist die Beleuchtungseinrichtung als Baueinheit neben der Betrachtungseinrichtung angeordnet, wobei die Beleuchtungseinrichtung mit der Betrachtungseinrichtung über eine Einrichtung zur Lichtleitung verbunden ist. Dies kann beispielsweise über Umlenkspiegel oder aber auch über ein weiteres Lichtleitkabel erfolgen.

Selbstverständlich ist es auch möglich, das Licht über das Lichtleitkabel der Beleuchtungseinrichtung unmittelbar in die Betrachtungseinrichtung einzukoppeln.

Die Einkopplung des Lichtes in die Betrachtungseinrichtung kann nach dem Auflichtprinzip oder nach dem Durchlichtprinzip vorgenommen werden.

In einer weiteren vorteilhaften Ausgestaltung der Erfindung ist die Betrachtungseinrichtung derart konfiguriert, um in dem Objektfeld mehrere verschiedene Objektpunkte abzuscannen.

Nachfolgend wird die Erfindung anhand eines Ausführungsbeispiels anhand einer Zeichnung näher erläutert, die ein Mikroskop mit einer Beleuchtungseinrichtung nach der Erfindung zeigt.

Das Mikroskop 1, das hier beispielhaft als Mikrolithograhpie-Simulationsmikroskop ausgebildet ist, ist mit einer Betrachtungseinrichtung 2 und einer Beleuchtungseinrichtung 3 ausgestattet. Hiermit lassen sich beispielsweise Masken für die Halbleiter- bzw. Waferherstellung, jedoch auch andere Objekte untersuchen.

Die Betrachtungeinrichtung 2 umfaßt ein Objektiv 4, das auf einen bewegbaren Tisch 5 mit einer Aufnahme für ein zu untersuchendes Objekt O gerichtet ist. Des weiteren ist eine Beleuchtungsoptik 6 vorgesehen, mit der an dem Objekt O ein flächenhaftes Objektfeld gleichmäßig ausgeleuchtet werden soll. In dem dargestellten Ausführungsbeispiel ist eine Beleuchtung nach dem Durchlichtprinzip vorgesehen. Es ist jedoch auch möglich, das Objekt O nach dem Auflichtprinzip zu beleuchten und zu untersuchen.

Die hier dargestellte Betrachtungseinrichung 2 ist zum Scannen von mehreren Objektpunkten in dem Objektfeld ausgebildet. Hierbei erhaltene Bildinformationen werden in einer an die Betrachtungseinrichtung 2 angeschlossenen Videokamera 7 aufgezeichnet. Anstelle der Videokamera 7 können jedoch auch andere mit einem Bildaufnahmesensor ausgestattete Aufzeichnungsmedien vorgesehen werden. Überdies kann die Betrachtungseinrichtung 2 bei entsprechender Ausgestaltung eine visuelle Beobachtung des flächig ausgeleuchteten Objektfeldes ermöglichen.

Dem Mikroskop 1 zugeordnet ist die bereits erwähnte Beleuchtungseinrichtung 3, die hier als separate Baueinheit dargestellt ist. Die Beleuchtungseinrichtung 3 umfaßt eine Laserlichtquelle 8 zur Erzeugung des Lichtes, mit dem das Objektfeld ausgeleuchtet werden soll. Die Laserlichtquelle 8 erzeugt kohärentes Licht im UV-Bereich und ist hier beispielhaft als gepulste Laserlichtquelle ausgebildet.

Bevor das von der Laserlichtquelle 8 erzeugte Licht auf ein Objekt O trifft, wird dieses durch ein Lichtleitkabel 9 geleitet. Das Lichtleitkabel 9 umfaßt eine oder auch mehrere optische Fasern und dient dazu, die Kohärenz des von der Laserlichtquelle 8 abgestrahlten Lichtes aufzubrechen. Hierzu bestehen unterschiedliche Möglichkeiten. So ist eine Homogenisierung der Intensitätsverteilung über den Querschnitt der optischen Faser abhängig von der Länge, dem Durchmesser und dem Material derselben. Durch eine gezielte Auswahl dieser Konfigurationsparameter wird zwischen dem Eingang (dem einstrahlseitigen Ende) und dem Ausgang (dem abstrahlseitigen Ende) des Lichtleitkabels eine deutliche Vergleichmäßigung der Intensitätsverteilung über den Querschnitt bewirkt.

In dem dargestellten Ausführungsbeispiel wird ein Lichtleitkabel 9 mit einer einzigen optischen Faser verwendet, die als Multimode-Lichtleiter ausgebildet ist. Die Länge der optischen Faser beträgt dabei 30 bis 100 cm, vorzugsweise 50 bis 60 cm. Das Lichtleitkabel 9 kann willkürlich in der Beleuchtungseinrichtung 3 verlegt werden. Auch können hin und her laufende Faserabschnitte gebündelt werden, so daß ein quasi mehradriges Kabel entsteht.

Weiterhin umfaßt die Beleuchtungseinrichtung 3 eine optische Einkopplungseinrichtung 10 in Form einer Linse oder Linsenanordnung, ggf. auch mit einer Blende, über die das Licht der Laserlichtquelle 8 in das Lichtleitkabel 9 eingekoppelt wird. Weiterhin ist eine optische Auskopplungseinrichtung 11 vorgesehen. Diese besteht wiederum aus einer oder auch mehreren Linsen und ggf. zusätzlichen Blenden.

Ein weiteres Lichtleitkabel 12 dient dazu, das von der Beleuchtungseinrichtung 3 über die optische Auskopplungseinrichtung 11 abgegebene Licht zum Objekt O zu leiten. Zwecks Anschluß an die Beleuchtungsoptik 6 und an die Beleuchtungseinrichtung 3 sind an den Enden des weiteren Lichtleitkabels 12 jeweils geeignete optische Koppler 13 und 14 vorgesehen.

In der vorstehend erläuterten Konfiguration wird bereits eine hohe Homogenität der Ausleuchtung eines Objektfeldes an dem Objekt O erzielt. Insbesondere kann das Auftreten von kohärentem Rauschen durch das Lichtleitkabel 9 stark vermindert werden, so daß im Bild des Objektfeldes störende Einflüsse durch das kohärente Rauschen bzw. Speckle vermindert oder gar vermieden werden.

Anstelle des vorstehend genannten weiteren Lichtleitkabels 12 kann auch eine Übertragung des Lichtes durch Umlenkspiegel erfolgen. Überdies ist es möglich, die Beleuchtungseinrichtung 3 unmittelbar an die Beleuchtungsoptik 6 anzuschließen.

In dem dargestellten Ausführungsbeispiel ist in der Beleuchtungseinrichtung 3 weiterhin eine rotierende Streuscheibe 15 vorgesehen, die hier zwischen der optischen Einkopplungseinrichtung 10 und dem Lichtleitkabel 9 positioniert ist. Auf die Darstellung der zugehörigen Antriebseinrichtung, mit der die Streuscheibe 15 in Drehung versetzt werden kann, wurde hier verzichtet.

Die Drehzahl der Streuscheibe ist so gewählt, daß diese für die Dauer eines Laserpulses, die beispielsweise 10 ns beträgt, quasi stillsteht, jedoch in dem Zeitraum zwischen zwei Laserpulsen weiterbewegt wird, bevor der nächste Laserpuls abgegeben wird (Wiederholfrequenz beispielsweise 200 Hz). Aufeinanderfolgende Pulse treten somit durch unterschiedliche Abschnitte der Streuscheibe 15 hindurch.

Für die vorstehend genannte Wiederholfrequenz genügen Geschwindigkeiten im Bereich von einigen Zentimetern pro Sekunde. Die Körnungsgröße der Granulierung liegt im Bereich 0,1 mm.

Zur Verstärkung des mit der Streuscheibe 15 bewirkten Homogenisierungseffektes kann zusätzlich eine zweite Streuscheibe (nicht dargestellt) vorgesehen werden, die je nach Ausgestaltung der Erfindung stillsteht oder in die entgegengesetzte Richtung rotiert. Steht die zweite Streuscheibe still, sollte sie in Strahlungsrichtung gesehen vorteilhafterweise vor der rotierenden Streuscheibe angeordnet sein.

Auch die Anordnung der Streuscheiben in bezug auf das Lichtleitkabel 9, die optische Einkopplungseinrichtung 10 und die optische Auskopplungseinrichtung 11 kann verhältnismäßig frei gewählt werden, d. h. die Streuscheibe 15 kann diesen Komponenten jeweils vor- oder auch nachgeschaltet werden. Dies gilt auch für weitere, eventuell vorhandene Streuscheiben in der Beleuchtungseinrichtung 3. Anstelle von granulierten Streuscheiben können auch mit holographischen Mustern versehene Streuscheiben verwendet werden, deren Muster im Hinblick auf einen Homogenisierungseffekt über den Strahlquerschnitt konfiguriert ist.

In einer weiteren Abwandlung des Ausführungsbeispiels ist es auch möglich, die optische Auskopplungseinrichtung 11 in die Beleuchtungsoptik 6 zu integrieren, so daß das Lichtleitkabel 9 die Funktion des weiteren Lichtleitkabels 12 mit übernimmt.

Die im Zusammenhang mit dem Mikroskop 1 beschriebene Beleuchtungseinrichtung 3 kann auch zu anderen Zwecken eingesetzt werden, und zwar beispielsweise überall dort, wo eine möglichst homogene, flächige Ausleuchtung eines ausgedehnten Objektfeldes bzw. Meßfeldes bei einem optischen Gerät gewünscht wird. Ein Beispiel hierfür ist eine Einrichtung zur fotolithographischen Belichtung von Halbleitersubstraten bzw. Wafern.

### Bezugszeichenliste

- 1: Mikroskop
- 2: Betrachtungseinrichtung
- 3: Beleuchtungseinrichtung
- 4: Objektiv
- 5: Tisch
- 6: Beleuchtungsoptik
- 7: Videokamera
- 8: Laserlichtquelle
- 9: Lichtleitkabel
- 10: Einkopplungseinrichtung
- 11: Auskopplungseinrichtung
- 12: Lichtleitkabel
- 13, 14: Koppler
- 15: Streuscheibe

- ○: Objekt

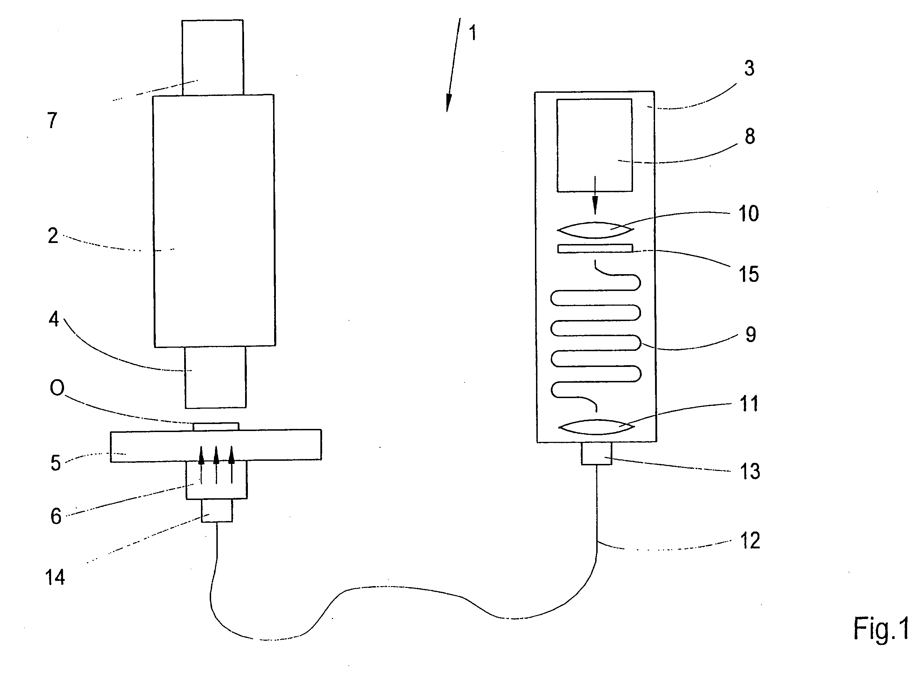

## Patentansprüche

1. Optisches Gerät, insbesondere Mikrolithographie-Simulationsmikroskop, mit einer auf ein Objektfeld ausrichtbaren Betrachtungseinrichtung (2) und einer Einrichtung (3) zur flächigen Beleuchtung des Objektfeldes, die umfaßt:
- eine Laserlichtquelle (8) zur Erzeugung von Beleuchtungslicht, und
- ein Lichtleitkabel (9) mit wenigstens einer optischen Faser, mit der das Beleuchtungslicht zu einem zu beobachtenden Objekt (0) geleitet wird,
**dadurch gekennzeichnet,**
**daß** die Laserlichtquelle (8) Licht im UV-Bereich, vorzugsweise bei einer Wellenlänge von 386 nm, 365 nm, 266 nm, 257 nm, 248 nm, 213 nm, 211 nm oder 193 nm, abstrahlt,
**daß** die optische Faser (9) als Multi-Mode-Lichtleiter ausgebildet ist und deren Länge zwischen 30 cm und 100 cm beträgt, und
**daß** die optische Faser (9) weiter so ausgebildet und bemessen ist, daß sich die Intensitätsverteilung des Beleuchtungslichtes innerhalb ihres Querschnitts auf dem Weg vom einstrahlseitigen zum abstrahlseitigen Ende zunehmend vergleichmäßigt und das Beleuchtungslicht vom abstrahlseitigem Ende der optischen Faser (9) mit homogener Intensitätsverteilung auf das Objekt (O) gerichtet ist.

2. Optisches Gerät nach Anspruch 1, **dadurch gekennzeichnet, daß** die Laserlichtquelle (8) als gepulste Laserlichtquelle betrieben wird.

3. Optisches Gerät nach Anspruch 1 oder Anspruch 2, **dadurch gekennzeichnet, daß** dem Lichtleitkabel (9) wenigstens eine rotierende Streuscheibe (15) vor- und/oder nachgeordnet ist.

4. Optisches Gerät nach Anspruch 3, **dadurch gekennzeichnet, daß** zwei Streuscheiben (15) mit entgegengesetztem Drehsinn vorgesehen sind.

5. Optisches Gerät nach Anspruch 3, **dadurch gekennzeichnet, daß** zwei Streuscheiben (15) vorgesehen sind, von denen eine rotiert und die zweite stillsteht, wobei die stillstehende Streuscheibe in Strahlungsrichtung gesehen vor der rotierenden Streuscheibe angeordnet ist.

6. Optisches Gerät nach Anspruch 4 oder 5, **dadurch gekennzeichnet, daß** die Streuscheiben (15) mit einer granulierten oder holographisch erzeugten optisch wirksamen Struktur versehen sind.

7. Optisches Gerät nach einem der Ansprüche 1 bis 5, bei dem zur Übertragung des Beleuchtungslichtes vom abstrahlseitigem Ende des Lichtleitkabels (9) zur Oberfläche des Objekts (O) ein weiteres Lichtleitkabel (12) vorgesehen ist, durch das die Homogenität der Intensitätsverteilung zumindest beibehalten wird.

## Claims

1. Optical device, in particular microlithography simulation microscope having a viewing device (2) which can be directed towards an object field and having a device (3) for surface illumination of the object field, which comprises:
- a laser light source (8) for producing illumination light, and
- a light-conducting cable (9) with at least one optical fibre, with which the illumination light is conducted to an object (O) to be observed,
**characterised in that**
the laser light source (8) emits light in the UV range, preferably with a wavelength of 386nm, 365nm, 266nm, 257nm, 248nm, 213nm, 211nm or 193nm,
the optical fibre (9) is formed as a multi-mode light guide and its length is between 30cm and 100cm, and
the optical fibre (9) is further formed and dimensioned in such a way that the intensity distribution of the illumination light within its cross-section becomes increasingly uniform as it passes from the incoming end to the emitting end and the illumination light from the emitting end of the optical fibre (9) is directed onto the object (O) with a homogeneous intensity distribution.

2. Optical device as claimed in claim 1, **characterised in that** the laser light source (8) is operated as a pulsed laser light source.

3. Optical device as claimed in claim 1 or claim 2, **characterised in that** at least one rotating diffusing disc (15) is disposed upstream and/or downstream of the light-conducting cable (9).

4. Optical device as claimed in claim 3, **characterised in that** two diffusing discs (15) which rotate in opposite directions are provided.

5. Optical device as claimed in claim 3, **characterised in that** two diffusing discs (15) are provided, one of which rotates and the second of which remains still, wherein the still diffusing disc is disposed upstream of the rotating diffusing disc when seen in the radiating direction.

6. Optical device as claimed in claim 4 or 5, **characterised in that** the diffusing discs (15) are provided with a granulated structure or a holographically produced, optically effective structure.

7. Optical device as claimed in any one of claims 1 to 5, wherein in order to transfer the illumination light from the emitting end of the light-conducting cable (9) to the surface of the object (O) a further light-conducting cable (12) is provided through which the homogeneity of the intensity distribution is at least retained.

## Revendications

1. Appareil optique, en particulier microscope de simulation de microlithographie, avec une installation d'observation (2) pouvant être orientée sur un champ d'objet et avec une installation (3) pour l'éclairage surfacique du champ d'objet, qui comprend :
- une source de lumière laser (8) pour produire une lumière d'éclairage, et
- un câble de guidage de lumière (9) avec au moins une fibre optique par laquelle la lumière d'éclairage est guidée vers un objet (O) à observer,
**caractérisé**
**en ce que** la source de lumière laser (8) rayonne la lumière dans la plage des UV, de préférence à une longueur d'onde de 386 nm, , 365 nm, 266 nm, 257 nm, 248 nm, 213 nm, 211 nm ou 193 nm,
**en ce que** la fibre optique (9) est réalisée comme conducteur de lumière multi-mode et que sa longueur est comprise entre 30 cm et 100 cm, et
**en ce que** la fibre optique (9) est en outre réalisée et dimensionnée de façon que la répartition de l'intensité de la lumière d'éclairage, à l'intérieur de sa section transversale, sur le chemin de l'extrémité côté rayonnement incident à l'extrémité côté rayonnement devienne de plus en plus uniforme et que la lumière d'éclairage est dirigée de l'extrémité côté rayonnement de la fibre optique (9) avec une répartition homogène de l'intensité sur l'objet (O).

2. Appareil optique selon la revendication 1, **caractérisé en ce que** la source de lumière laser (8) est amenée à fonctionner comme source de lumière laser pulsée.

3. Appareil optique selon la revendication 1 ou la revendication 2, **caractérisé en ce qu'**au moins un disque de diffusion tournant (15) est disposé en amont et/ou en aval du câble de guidage de lumière (9).

4. Appareil optique selon la revendication 3, **caractérisé en ce que** deux disques de diffusion (15) à sens de rotation opposé sont prévus.

5. Appareil optique selon la revendication 3, **caractérisé en ce que** deux disques de diffusion (15) sont prévus dont un tourne et le second est à l'arrêt, où le disque de diffusion à l'arrêt, en regardant dans la direction du rayonnement, est disposé en amont du disque de diffusion tournant.

6. Appareil optique selon la revendication 4 ou 5, **caractérisé en ce que** les disques de diffusion (15) sont munis d'une structure optiquement active, granulée ou produite de manière holographique.

7. Appareil optique selon l'une des revendications 1 à 5, dans lequel est prévu pour la transmission de la lumière d'éclairage de l'extrémité côté rayonnement du câble de guidage de lumière (9) vers la surface de l'objet (O) un autre câble de guidage de lumière (12), par lequel l'homogénéité de la répartition de l'intensité est au moins conservée.
